Europäisches Patentamt

European Patent Office

Office européen des brevets

(19)

(11) Publication number: **0 308 692**
**A2**

(12) **EUROPEAN PATENT APPLICATION**

(21) Application number: **88114122.0**

(22) Date of filing: **30.08.88**

(51) Int. Cl.⁴: **H02G 7/12**

(30) Priority: **22.09.87 IT 2198387**

(43) Date of publication of application:
**29.03.89 Bulletin 89/13**

(84) Designated Contracting States:
**AT BE CH DE ES FR GB GR IT LI LU NL SE**

(71) Applicant: **A. Salvi & C. S.p.a.**
**Via E. Cosenz, 32**
**I-20157 Milano(IT)**

(72) Inventor: **Diana, Giorgio**
**Via Bassini, 23**
**I-20133 Milano(IT)**

(74) Representative: **Faggioni, Giovanmaria, Dr. et al**
**Fumero-Studio Consulenza Brevetti**
**Widenmayerstrasse 4/I**
**D-8000 München 22(DE)**

(54) Damping spacer for bundle conductors of high voltage overhead electric lines with optic fibres cable inside the bundle.

(57) The present invention concerns a damping spacer for bundle conductors of high voltage overhead electric lines, particularly for a bundle of electric sub-conductors inside which there is positioned an optic fibres cable. The spacer comprises a stiff body, onto which there are hinged a plurality of support arms, each through a springing hinge, to the end of each arm there being associated a clamp for connection and anchorage to each sub-conductor of the bundle. The stiff body has a nonsymmetrical configuration, eccentric in respect of the central axis of the bundle of conductors, which leaves free the central zone of the bundle. The stiff body also carries at the centre a hinge for a supplementary rocking arm, the end of which projects towards said central zone of the bundle and carries a connection clamp for an optic fibres cable.

FIG.2

# DAMPING SPACER FOR BUNDLE CONDUCTORS OF HIGH VOLTAGE OVERHEAD ELECTRIC LINES WITH OPTIC FIBRES CABLE INSIDE THE BUNDLE

It is known that the use of so-called bundle conductors for high voltage overhead electric lines determines the requirement to position, at regular intervals along the line, some spacing elements between the elementary conductors of the bundle. The function of such spacers is first of all to prevent the single sub-conductors of the bundle from intersecting or overlapping, due to the vibrations and oscillations imparted on the sub-conductors by the action of wind or, generally, by atmospheric agents, with consequent serious damage to the line. The same spacers are then also apt to perform the function of damping the vibrations due to the wind.

A type of spacer having excellent characteristics of behaviour, especially as far as damping action, is described in the Italian Patent application No. 22559 A/82, filed by the same Applicant. This spacer comprises a stiff central body, onto which there are hinged - by means of springing hinges - support arms for as many connection clamps to the sub-conductors of the bundle. According to a preferred arrangement, said support arms are positioned, in rest conditions, so as to form a narrow angle in respect of a horizontal line passing through the axis of the respective hinge.

It has recently been proposed to construct overhead electric lines with bundle conductors, and more precisely with three-conductor bundles, associating to the bundle an optic fibres cable. According to this recent proposal, the optic fibres cable is laid out along the central axis of the bundle of conductors, namely inside the surface enveloping the single sub-conductors of the bundle.

Said proposal has determined the requirement to dispose of spacers apt to perform, not only the normal function of mutually spacing the sub-conductors of the bundle and damping the vibrations imparted thereon, but also the function of clamping, positioning and supporting the optic fibres cable.

The problem of obtaining a spacer apt to perform this supplementary function is not so simple, since the optic fibres cable is by nature very delicate, if not even fragile, and it is unthinkable to lay it out along the bundle, simply imparting on it the same tensioning force to which are subjected the sub-conductors of the bundle. Consequently, the spacer cannot merely perform the spacing function proper thereto, in order to guarantee the correct mutual positioning of the sub-conductors and of the optic fibres cable, but it should also perform a true and proper function of support of said optic fibres cable along the bundle of conductors. On the other hand, the spacer must equally perform the known function of damping the vibrations imparted by the wind not only on the sub-conductors but also on the optic fibres cable.

These different problems are now solved by the spacer according to the present invention which comprises, in known manner, a stiff support body, onto which there are hinged a plurality of support arms, each through a springing hinge, to the end of each arm there being associated a clamp for connection and anchorage to each sub-conductor of the bundle. According to the invention, said stiff body has a nonsymmetrical configuration, eccentric in respect of the central axis of the bundle of conductors, which leaves free the central zone of said bundle. Moreover, said stiff body comprises a position for connection of a hinge for a supplementary rocking arm, the end of which projects towards said central zone of the bundle and carries a connection clamp for an optic fibres cable.

Further characteristics and advantages of the spacer according to the invention will anyhow be more evident from the following description of a preferred embodiment thereof, given however by mere way of example and illustrated on the accompanying drawings, in which:

Fig. 1 is a front view of a spacer for a three-conductor bundle according to the invention, without the supplementary rocking arm;

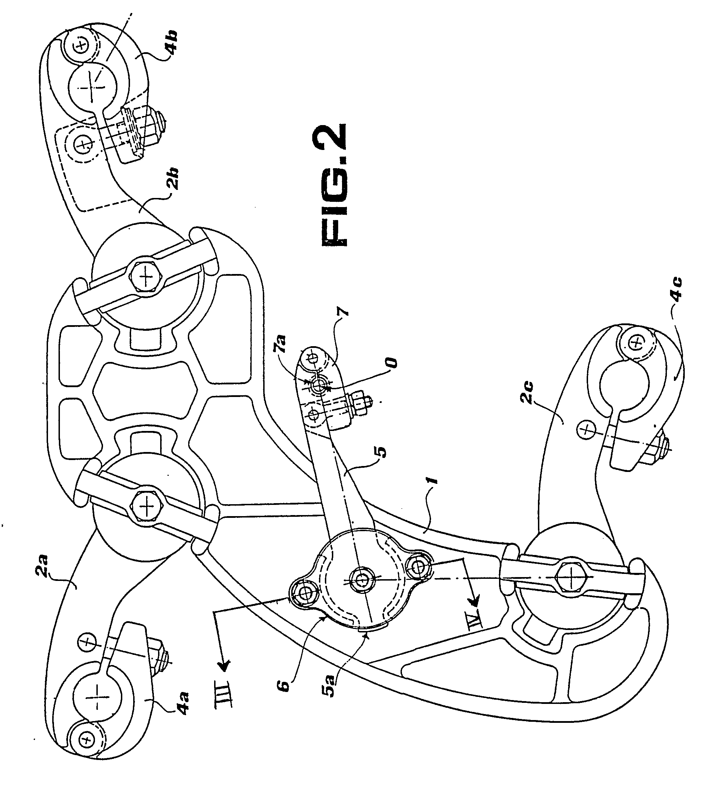

Fig. 2 is a view similar to that of figure 1, wherein the spacer is provided with the supplementary rocking arm;

Fig. 3 is a diagrammatic section along the line III-III of figure 2;

Fig. 4 is a plan view of one of the two caps forming the box of the hinge for the supplementary rocking arm; and

Fig. 5 is a diagrammatic section along the line V-V of figure 4.

As said, the spacer illustrated by way of example can be used for a three-conductor bundle, i.e. formed of three sub-conductors positioned - according to a traditional configuration, seen croswise to the axis of the bundle - at the apices C1, C2 and C3 of an equilateral triangle having its base at the top and its apex below, called hereinafter "enveloping triangle" and marked by dash-and-dot lines.

As shown, the spacer comprises a stiff body 1, onto which are mounted the rocking arms 2a, 2b and 2c, each hinged through a respective springing hinge 3a, 3b and, respectively, 3c. These hinges are of the type of those described in the aforecited Patent application No. 22559 A/82. To the ends of each of the arms 2a, 2b and 2c, there are fixedly connected the clamps 4a, 4b and 4c for connection to the single sub-conductors of the bundle (not shown).

According to a first important aspect of the present invention, the stiff body 1 - instead of having a centred, symmetrical shape, as described in the cited Patent application No. 22559 A/82 - has a nonsymmetrical configuration, eccentric in respect of the central axis 0 of the bundle of conductors. In actual fact, the stiff body 1 has an arcuate shape, into the upper substantially horizontal part of which, practically parallel and very close to the upper side A of the triangle enveloping the bundle, there are fixed the two hinges 3a and 3b, from which project the arms 2a and 2b in a substantially horizontal direction. At the lower end of the arc-shaped body 1 there is instead fixed the hinge 3c from which projects, also in a substantially horizontal direction, the lower arm 2c. This configuration is such as to leave free the central zone of the spacer, i.e. of the triangle enveloping the bundle, for the function better described hereinafter.

According to another important aspect of the invention, in a substantially central position of the body 1 there is hinged a supplementary rocking arm 5 through an own hinge 6. Said arm, which carries at the free end a clamp 7 for anchorage to the optic fibres cable (not shown), projects towards the central zone of the bundle up to a position in which the centre of the clamp 7 substantially coincides with the axis 0 of the bundle. Also the arm 5 is positioned substantially horizontal and can freely oscillate together with the optic fibres cable.

According to the preferred embodiment, illustrated in the drawings, between the opposed clamping grooves of the clamp 7 and the optic fibres cable there is interposed a rubber sleeve 7a, having the function to improve the clamping and vibration damping conditions of said optic fibres cable, so as to avoid damaging the same, as already pointed out in the European Patent application No. 87110597.9, filed on 22.7.87 by the same Applicant.

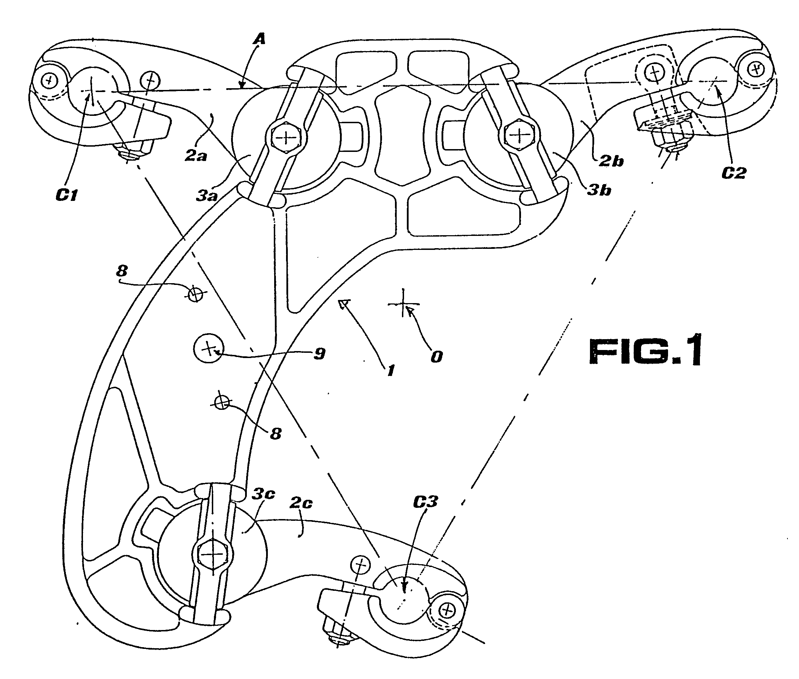

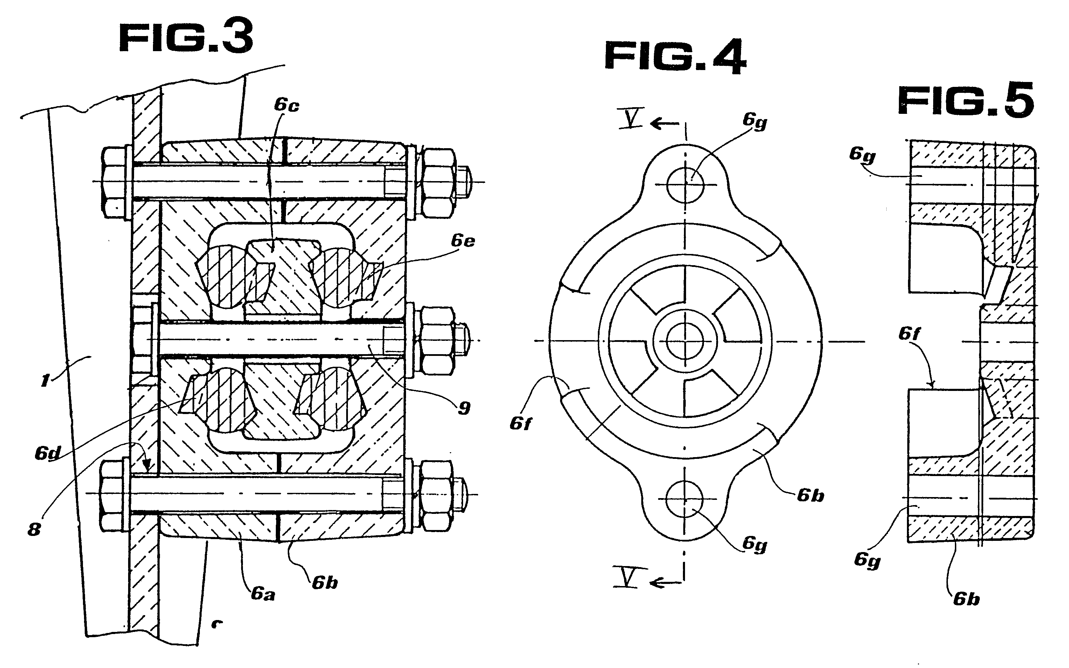

According to another important characteristic of the invention, the hinge 6 consists of a box-like body formed of two shells or caps 6a and 6b having their respective concavities specularly opposed, said box-like body being fixed by means of through bolts into the holes 8 of the body 1 (see figures 1 and 3); Into the box 6a, 6b, there is housed the hub 6c, which is fixedly connected to the arm 5 and which is rotatable inside the box 6a, 6b, around the axis 9.

Between each of the two caps 6a, 6b, and the respectively adjacent face of the hub 6c there are interposed damping means in the form of pads 6d, 6e, of elastomer material. Said pads are formed according to the teaching of the aforecited Patent application No. 22559 A/82, and are thus provided with projections housing into hollow seats formed in the caps 6a, 6b, and in the hub 6c.

From the side of the hub 6c opposite to the arm 5 there projects an appendix 5a, which forms an element apt to limit the oscillation stroke of said arm 5, thanks to its stopping against the edges of a window 6f formed in the box 6a, 6b.

The structure of the hinge box, and more precisely of one of the two caps 6a, 6b, is shown more clearly in figures 4 and 5. As can be noted, said caps comprise, in addition to the hollow seats for housing the damping pads, some through holes 6g, through which bolts are inserted for anchorage to the holes 8 of the stiff body 1.

This arrangement allows an easy mounting of the hinge 6 and arm 5, so that the spacer according to the invention lends itself very well for use both as a simple spacer for a conventional three-conductor bundle, and as a spacer for a three-conductor bundle with supplementary optic fibres cable.

It is anyhow understood that the invention is not limited to the particular embodiment described and illustrated, but that there may be many variants differing therefrom, above all for what concerns the structure of the damping hinges or the nonsymmetrical configuration of the stiff central body, without thereby departing from the protection scope of the invention itself.

## Claims

1) Damping spacer for bundle conductors of high voltage overhead electric lines, particularly for three-conductor bundles, of the type comprising, in known manner, a stiff support body, onto which there are hinged a plurality of support arms, each through a springing hinge, to the end of each arm there being associated a clamp for connecttion and anchorage to each sub-conductor of the bundle, characterized in that said stiff body has a nonsymmetrical configuration, eccentric in respect of the central axis of the bundle of conductors, which leaves free the central zone of the bundle.

2) Spacer as in claim 1) wherein, on said stiff body there is mounted, in a substantially central position of connection, a supplementary hinge for a supplementary rocking arm, the end of this latter projecting towards said central zone of the bundle and carrying an anchor clamp for a service cable.

3) Spacer as in claim 2), wherein said service cable consists of an optic fibres cable.

4) Spacer as in claim 3) wherein, between said anchor clamp and the optic fibres cable there is interposed an elastomer sleeve.

5) Spacer as in claim 2), wherein said supplementary rocking arm extends from said position of connection of its hinge towards said central zone, in a substantially horizontal direction.

6) Spacer as in claim 2), wherein said supplementary hinge is a damping, springing hinge.

7) Spacer as in claim 6), wherein said supplementary springing hinge is formed of a box fixed to said stiff body, and of a hub fixedly connected to said supplementary rocking arm and mounted rotatable inside said box, between the box and the hub there being interposed vibration damping means.

8) Spacer as in claim 7), wherein said box is formed of two caps with specularly opposed concavities.

9) Spacer as in claim 7), wherein said damping means interposed between the box and the hub consist of pads of elastomer material housed into opposite hollow seats of the box and of the hub.

**FIG.1**

**FIG.2**

EP 0 308 692 A2

FIG.5

FIG.4

FIG.3